(19) **Europäisches Patentamt**
**European Patent Office**
**Office européen des brevets**

(11) **EP 3 152 032 B1**

(12) **EUROPEAN PATENT SPECIFICATION**

(45) Date of publication and mention
of the grant of the patent:
**12.02.2020 Bulletin 2020/07**

(21) Application number: **14731182.3**

(22) Date of filing: **06.06.2014**

(51) Int Cl.:
*B29C 67/00* (2017.01)  *B22F 3/105* (2006.01)
*B33Y 70/00* (2020.01)  *B33Y 50/02* (2015.01)
*B29C 70/58* (2006.01)  *B22F 1/00* (2006.01)
*B22F 1/02* (2006.01)  *B22F 9/24* (2006.01)
*B22F 9/30* (2006.01)  *B29C 64/106* (2017.01)
*B29C 64/112* (2017.01)  *B29C 64/20* (2017.01)
*B29C 64/386* (2017.01)

(86) International application number:
**PCT/EP2014/061844**

(87) International publication number:
**WO 2015/185155 (10.12.2015 Gazette 2015/49)**

(54) **3D PRINTING MATERIAL ENCODING**

3D-DRUCKMATERIAL-CODIERUNG

ENCODAGE DE MATÉRIEL D'IMPRESSION 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.04.2017 Bulletin 2017/15**

(73) Proprietor: **Das-Nano, S.L.**
**31192 Tajonar (ES)**

(72) Inventors:
• **TEJADA PALACIOS, Javier**
**E-08007 Barcelona (ES)**
• **AZANZA LADRÓN, Eduardo**
**31119 Tajonar (ES)**
• **BARBADILLO VILLANUEVA, Guillermo**
**E-31004 Pamplona (ES)**

• **ZABALA RAZQUIN, Daniel**
**E-31004 Pamplona (ES)**
• **TABOADA CABELLOS, Elena**
**E-31004 Pamplona (ES)**
• **SUBIZA GARCÍA, Mikel**
**E-31004 Pamplona (ES)**
• **ARNEDO GIL, Israel**
**E-31006 Pamplona (ES)**

(74) Representative: **Igartua, Ismael et al**
**Galbaian S. Coop.**
**Garaia Parke Teknologikoa**
**Goiru Kalea 1**
**20500 Arrasate-Mondragón (ES)**

(56) References cited:
**WO-A1-91/12119**  **WO-A1-2005/099635**
**US-A1- 2004 004 113**  **US-A1- 2011 117 268**

## Description

The present disclosure relates to three-dimensional (3D) printing and more particularly to materials and technics for encoding 3D printing material.

BACKGROUND ART

3D printing is a process of making a three-dimensional solid object of virtually any shape from a digital model. 3D printing is achieved using an additive process, where successive layers of material are laid down in different shapes. A 3D printer is a limited type of industrial robot that is capable of carrying out an additive process under computer control. To perform a print, the machine reads the design from a 3D printable file and lays down successive layers of a 3D printing material, typically in the form of a filament or in the form of a flowable material such as liquid, resin or powder, to build the model from a series of cross sections. These layers, which correspond to the virtual cross sections from the 3D printable file model, are joined or automatically fused to create the final shape. The primary advantage of this technique is its ability to create almost any shape or geometric feature.

The proliferation of 3D printing has given rise to a number of applications. For example, 3D printing is already used in such diverse applications as design visualization, prototyping/CAD, metal casting, architecture, education, geospatial, healthcare, food and entertainment/retail. The quality and complexity of printer designs, however, as well as the quality of materials or finished products, varies greatly from application to application. As the quality of material for certain applications may be critical for the commercialization of such applications, there is great concern about the use of unauthorized or forged materials that may appear in the market. Furthermore, there is a need to authenticate that certain 3D printed objects have been printed using original and authorized materials for their printing.

It would be desirable to provide materials and techniques that at least partially resolve the aforementioned problems.

Documents WO 2005/099635, US 2011/117268 and US 2004/004113 disclose the usage of encoded material blends for identifying said material.

SUMMARY OF THE INVENTION

In a first aspect a 3D printing material blend is disclosed. The 3D printing material blend is configured to be used in a 3D printer. The 3D printing material blend comprises a 3D printing material portion and a magnetic nanoparticle portion. The magnetic nanoparticle portion is embedded in the 3D printing material portion in such a way that the 3D printing material blend is encoded with a uniquely identifiable predetermined code, wherein the magnetic nanoparticle portion comprises:

(i) a magnetic field amplitude dependent magnetic moment or susceptibility; or
(ii) a frequency-dependent magnetic susceptibility; and wherein the predetermined code is related to one or more characteristics of said nanoparticles that affect said magnetic moment or susceptibility. By embedding the magnetic nanoparticle portion in the 3D printing material it is possible to encode the 3D printing material as the magnetic properties of the 3D printing material will be altered by the presence of the embedded nanoparticle material.

In some examples the magnetic nanoparticle portion may comprise ferromagnetic, ferrimagnetic or antiferromagnetic nanoparticles. The nanoparticles may comprise a magnetic field amplitude dependent magnetic moment or susceptibility. Magnetic nanoparticles behave as single domain particles when their size is smaller than a critical size called domain wall thickness, which is mostly determined by the square root of the ratio between the exchange and the anisotropy energies. In this case, they are called superparamagnetic nanoparticles. When the nanoparticles have a size over this critical value, magnetic domains appear inside the particle. This critical size varies with the material composition, i.e. on their crystalline structure. A set of single domain particles is magnetically blocked, that is, they show hysteresis phenomena, when the thermal energy is lower than the anisotropy barrier height. The above mentioned anisotropy barrier height, U, is given by $U=KV$, being K the anisotropy constant and V the volume of the particle. Consequently, in the case of the blocked state the spins may not fluctuate between the two possible spin states (orientations) giving rise to a permanent magnetic moment even in the absence of an external magnetic field. Then, the susceptibility of these ferromagnetic or ferrimagnetic nanoparticles may not depend any more on the frequency of an externally applied magnetic AC field. However, when decreasing the size of the particles their net magnetic moment may be dependent on both the amplitude of the DC magnetic field, up to a saturation value called the saturation magnetization, which depends on the crystalline structure of the material, and also on the frequency of the AC applied magnetic field. The contribution of the ferromagnetic or ferrimagnetic nanoparticles to the encoding of the 3D printing material would be, therefore, a net value of magnetic moment in the presence of a DC magnetic field (dependent on the amplitude) and a net value of the magnetic susceptibility in the presence of an AC magnetic field. It may also be possible to use very small antiferromagnetic particles because the spin non-compensation of the two sublattices may make it possible that these particles have a net magnetic moment. That is, these small antiferromagnetic particles may behave as the ferromagnetic and ferrimagnetic particles with the only difference that they may have a smaller magnetic moment and, also, a smaller magnetic blocking temperature. The predetermined code may be related to one or more characteristics of the nanoparticles that affect said, volume, magnetic moment, anisotropy constant and magnetic susceptibility. In some examples said characteristics may be the concentration and/or the chemical composition of the nanoparticles.

In some examples the magnetic nanoparticle portion may comprise a superparamagnetic nanoparticle material. The superparamagnetic nanoparticle portion may comprise a frequency-dependent magnetic susceptibility and the predetermined code may be related to one or more characteristics of the superparamagnetic nanoparticle material that affect said magnetic susceptibility. By selectively tagging the 3D printing material with a superparamagnetic nanoparticle material that has specific characteristics it is possible to generate a unique frequency-dependent magnetic susceptibility characteristic that uniquely identifies the 3D printing material blend.

In some examples, said one or more characteristics may be selected from the following or a combination thereof: (i) an average magnetic size of nanoparticles of the magnetic nanoparticle portion, (ii) a magnetic size distribution of said nanoparticles, (iii) a chemical composition of said nanoparticles, and (iv) a coating of said nanoparticles. Each combination of the above characteristics may generate a 3D printing material blend with distinct susceptibility response for different frequencies.

The magnetic size has a direct relation with the magnetic behavior. However, particles with the same physical size (or "TEM- Transmission Electron Microscopy" size) may have different magnetic behavior because of various factors such as surface spin disorder, surfactant layer or differences in crystallization that result in a different anisotropy constant.

Because of that it's not possible to know the exact magnetic behavior using the physical size distribution. Only by using the magnetic size it's possible to compute the magnetic behavior.

The magnetic size distribution may be obtained from magnetic measurements and using a fixed value for the Anisotropy constant. It's possible to obtain the magnetic size from AC magnetic measurements, FC-ZFC measurements or with other methods.

For example measuring the FC and ZFC of the magnetic nanoparticles allows computing the magnetic size distribution using the following equation:

$$g\left(\emptyset_m(T)\right) = -\frac{1}{\alpha}T^{\frac{2}{3}}\frac{dM_{FC-ZFC}}{dT} \qquad \text{Eq. 1}$$

$$\alpha = \frac{M_s^2 H \mu_0}{2k_B}\,1/3\,\left(\frac{6}{\pi}\right)^{\frac{1}{3}}\left(\frac{k_B \ln\left(\frac{\tau_m}{\tau_0}\right)}{K}\right)^{\frac{4}{3}} \qquad \text{Eq. 2}$$

where

- g is the magnetic size distribution
- $\emptyset_m$ Is the magnetic diameter
- $M_s$ is the magnetic saturation
- $M_{FC-ZFC}$ is the difference between the magnetic moment measured at the FC an ZFC experiments
- H is the applied magnetic field
- $\mu_0$ is the magnetic permeability of vacuum
- $\tau_m$ is the measurement time
- $\tau_0$ is the attempt time
- K is the anisotropy constant
- $k_B$ is the Boltzmann constant
- T is the temperature

In some examples, the superparamagnetic nanoparticle portion may be comprised of at least one of the following magnetic nanoparticle compounds or a combination thereof: metal oxides, such as iron oxides (e.g. FeO, Fe2O3, Fe3O4) or other metal oxides (such us iron ferrites, MFe2O4, being M only one or a combination of the following elements = Fe, Co, Ni, Cu, Zn, Mn, Cr, V, Ti, Sc, Y, Zr, Nb, Mo, Tc, Ru, Rh, Ag, Cd, La, Hf, Ta, W, Ir, Be, Mg, Ca, Sr, Ba, Li, Na, K, Rb, Cs, B, Al, Ga, In, Tl, Si, Ge, Sn, Pb, As, Sb, Bi, Ce, Pr, Nd, Pm, Sm, Eu, Gd, Tb, Dy, Ho, Er, Tm, Yb, Lu, actinides, etc.), transition metal oxides (such as MOx, being M = Co, Ni, Zn, Mn, Cu, etc.) and iron alloys (such as FePt, FePd, etc.).

Examples of suitable nanoparticle compounds may be:

- Superparamagnetic iron oxides (SPIOs):

  - FeO: iron (II) oxide, wüstite
  - $Fe_2O_3$: iron (III) oxide
  - $\gamma$-$Fe_2O_3$, maghemite
  - $Fe_3O_4$:iron (11,111) oxide, magnetite

- Other superparamagnetic transition metal oxides:

  - MnO: manganese oxide
  - CoO: cobalt (II) oxide
  - ZnO: zinc (II) oxide
  - Ferrites (MFe2O4), being M = Mn, Zn, Cu, Co, Gd, V, In, Mg, Ba, Sr, etc.

- Other superparamagnetic compounds:

  - FePt: iron-platinum alloys
  - FePd: iron-paladium alloys

- Different combinations of the above mentioned materials.

Nanoparticles of some of these materials may be magnetic, although in bulk they may display antiferromagnetic properties, due to small size effects (surface spins, spin disorder, etc.).

The above mentioned compounds present the following properties that make them suitable for the purpose of embedding in 3D printing material:

- They are single-domain below a critical particle size, i.e. composed of a single magnetic domain.
- They display a superparamagnetic behaviour: at room temperature below a given particle size (different from the previously mentioned critical particle size)
- Their magnetization can randomly flip direction under the influence of temperature;
- The typical time between two flips is called the Neel relaxation time, and is given by

$$\tau_N = \tau_0 e^{\left(\frac{K_u V}{k_B T}\right)} \qquad \text{Eq.3}$$

where

- $\tau_0$ is the attempt time or attempt period, and it represents a length of time which is characteristic of the material,
- $K_u$ is the nanoparticle's magnetic anisotropy constant,
- V is the nanoparticle's volume,
- $k_B$ is the Boltzmann constant,
- T is the absolute temperature;

- In the absence of an external magnetic field, the magnetization of said particles appears to be zero if measured over a time that is much longer than the Neel relaxation time;
- In the presence of an external magnetic field, the magnetic moments of such nanoparticles align with the external magnetic field and a net magnetization is observed; when the external magnetic field is removed, no magnetization remains.

Their magnetic susceptibility, X, which is a dimensionless proportionality constant that indicates their degree of magnetization in response to an external magnetic field, depends, among other factors, on the frequency of the external magnetic field.

In some examples, the 3D printing material may comprise a set of 3D printing properties. The mass proportion of said magnetic nanoparticle portion in the total mass of said 3D printing material blend may then be such that the 3D printing material blend maintains the 3D printing properties of the 3D printing material. As the purpose of the encoding is merely for identifying the material and not to alter its properties, the quantity and distribution of the taggant must be such that the printing qualities of the 3D printing material blend are substantially the same as the ones of the 3D printing material without the taggant.

In some examples, said 3D printing material portion may comprise organic and/or non-organic compounds. Said organic and/or non-organic compounds may belong to one or more of the following families: (i) polymers; (ii) metals; (iii) woods; (iv) cells; or (v) tissues. However, any other printing material may be used.

In some examples, said 3D printing material portion may be a filament type material. Said magnetic nanoparticle portion may then be distributed in a predetermined spatial sequence and/or pattern in the 3D printing filament so that the predetermined code may contain one or more uniquely identifiable units of information. The amount of permissible uniquely identifiable combinations may be large but finite. Each of the combinations may convey one unit of information. Said unit of information can be understood by the printing machine in two steps: A direct measurement of a specific magnetic property of the tagging substance (TS) is performed and then a translation of the result of said measurement into a numeric unit by fetching information from a lookup table.

In some examples, each unit of information within said code may be recorded at predetermined spatial intervals. In some examples said magnetic nanoparticle portion may be distributed in the filament type material is such a way that the predetermined code is recorded at predetermined spatial intervals to form encoded zones on the filament type material. The identification/authentication code for the printing material may comprise one or more bytes of information, each of which may contain a finite number of the previously described units, and each of which may be recorded in a prescribed spatial sequence or pattern. Alternatively or complementarily it may be recorded in one or more regions of the printing material in order to provide different levels of security (e.g. the code may be recorded once at one end of the printing material, or it may be recorded at regular or irregular intervals in order to provide a more comprehensive protection from forgery).

In some examples, said encoded zones may cover portions of the filament type material or the entire filament type material. In case the identification of the material is required before the material is used in a 3D printer, it may be sufficient to only encode portions of the filament. However, if the 3D printed objects are to be identified it is preferable to encode the whole material so that no 3D printed object may be printed with an unencoded portion of the filament which could consequently leave the 3D printed object without any quantity of tagging substance and, thereby, without a tag.

In some examples, said 3D printing material portion may be a flowable type material such as resins, powders or liquids or a combination thereof. The magnetic nanoparticle portion may then be evenly distributed in the flowable type material. Small quantities (e.g. less than 1% in mass of a tagging substance (TS) may be added to the flowable type material and be evenly distributed within it.

In some examples of 3D printing material blend, either of the filament or the flowable type material, said magnetic nanoparticle portion may comprise one or more tagging substances (TS). Each tagging substance may comprise one or more elementary tagging substances (ETS), each containing a certain type of magnetic nanoparticles. Said tagging substance (TS) may be the result of combining one or more elementary tagging substances (ETS), each containing a certain type of magnetic nanoparticles (MNPs). There may be a large but finite number of permissible uniquely identifiable combinations, each of which may be unequivocally associated with a printing material. The printing material can therefore be identified in two steps: First, a direct measurement of one or more specific magnetic properties of the tagging substance may be taken and then a translation of the result of said measurement into the identification code may take place by fetching information from a lookup table.

In some examples, said 3D printing material blend may be used alone or in combination with non-coded materials so that a 3D object printed using said 3D printing material blend or using said combination is coded with a unique hidden signature. For example, if a 3D printed object is multicolour, only one of the colours needs to be tagged in order for the whole of the printed object to be coded.

In another aspect a 3D printing unit is disclosed. The 3D printing unit may comprise a holder supporting a 3D printing blend according to examples herein. The holder may be configured to be coupled to a 3D printer. The 3D printing material blend may be arranged with the holder so that the 3D printing material blend is configured to be provided to the 3D printer. For example, the 3D printing unit may comprise a 3D printing cartridge with an opening and the 3D printing material blend may be extractable from said opening. Alternatively the 3D printing unit may comprise a 3D filament reel and the 3D printing material blend may be wound around the reel.

In some examples, the 3D printing unit may further comprise a uniquely identifiable code associated with the uniquely identifiable code of the 3D printing material blend. The 3D printing unit may contain information coded with the same technology or other coding technologies such as barcode, QR code etc. A cross-check strategy may be followed, by checking the concordance between the code of the 3D printing blend's housing (e.g. cartridge) and that of the blend itself.

In some examples, the 3D printing unit may further comprise one or more sensors. The sensors may be configured to determine the magnetic susceptibility of the 3D printing mixture blend at a predefined frequency or range of frequencies. Several magnetic sensors can be used. For example:

i. Inductive sensors;
ii. Giant magnetoresistance (GMR) sensors;
iii. Tunnel magnetoresistance (TMR) sensors;
iv. Anisotropic magnetoresistance (AMR) sensors;
v. Fluxgate sensors;
vi. Nuclear precession sensors;
vii. Hall effect sensors;
viii. Wave resonators sensors.

In some examples, each of the one or more sensors may comprise at least one excitation coil and at least one detection coil. AC current flowing through the excitation coil may generate an AC field that changes magnetic flux in the presence of the 3D printing blend, thereby modifying an induced voltage in the detection coil. The AC susceptibility detection method described herein is based on induction sensors and consists of at least two coil based inductive sensors. However, one skilled in the art may appreciate that other type of sensors, such as the ones mentioned above, may be used as part of the invention. Furthermore, it should be noted that the same sensors may be used as magnetic field amplitude detectors. For this purpose, a direct current (DC) signal may be used in the excitation coils of said sensors.

In some examples, the one or more sensors may be arranged in a balanced electronic configuration. They may, for example, be arranged in a circuit which yields an imbalanced voltage. For example, each sensor may comprise a pair of excitation coils and a pair of detection coils. In order to obtain good sensitivity a balanced system of coils may be used. Voltage read by the detection circuit is ideally zero when there is no superparamagnetic material close to one of the sensing elements. In a configuration with two detecting coils this can be achieved by wounding the ideally equal coils in opposite direction.

In yet another aspect, a 3D printing system is disclosed. The 3D printing system may comprise a 3D printer and one or more 3D printing units according to examples disclosed herein, coupled to the 3D printer. For example, in multicolour configurations a plurality of 3D printing units may be present, one for each colour.

In some examples, one or more sensors may be coupled to said 3D printer along an extraction path of the 3D printing material blend. The one or more sensors may be coupled before or after, e.g. right before or right after, a heating unit of said 3D printer. Therefore if, e.g., an erroneous filament is detected, no printing may be initiated or printing may be stopped soon after such erroneous filament is detects..

In some examples, the 3D printing system may comprise a plurality of sensors. Each sensor may be tuned to a different frequency range. At least one sensor may be installed in the printer, ideally before the heating unit for filament-based printers or immediately after the cartridge (or basin), or inside the cartridges (or basin) for resin-based printers. As each sensor is tuned to a particular frequency range, several sensors may be preferable if the range of frequencies of interest is large (e.g. f2/f1>100).

In another aspect, a method of encoding a 3D printing material blend is disclosed. In a first step, a 3D printing material and at least one magnetic nanoparticle material may be provided. Then, at least a portion of the magnetic nanoparticle material may be embedded in at least a portion of the 3D printing material to generate the encoded 3D printing material blend. Each permissible 3D printing material blend may have a unique numeric code associated to it. Said numeric code may be conveyed by a set of information units and bytes that are recorded in the printing material by embedding samples of nanoparticles.

The identification and/or authentication of each permissible printing material may be performed in the following steps: First AC susceptibility values produced by the sensor(s) are used to calculate a unique fingerprint of each sample. Then, said unique fingerprint may be translated into a numeric value through a lookup table. Said lookup table may unequivocally relate the unique magnetic fingerprint of each and every permissible sample to a numeric value. The values may be read from: (i) the cartridge or reel of the printing material; or (ii) the printer's hardware; or (iii) an external security key; or (iv) a remote server. Said numeric value may represent one single unit of information within the whole identification/authentication code recorded in the printing material.

When said 3D printing material is a filament type material said embedding may comprise prescribing one or more locations in the 3D printing material and embedding the magnetic nanoparticle material in said one or more prescribed locations. The specific number of bytes and information units comprising the code, as well as the locations from which each individual unit of information should be detected, may also be stored by advanced cryptographic systems in: (i) the cartridge or reel of the printing material; or (ii) the printer's hardware; or (iii) an external security key; or (iv) a remote server.

Information regarding said lookup table and said number and location of units of information to be read may be available through the same or different media (e.g. lookup table stored in an external security key, but number and location of units of information to be read stored in a remote server), thus allowing the printer to perform cross validation.

In some examples, embedding may further comprise the steps of providing at least a first quantity of a first magnetic nanoparticle material at a first location of the 3D printing material and providing at least a second quantity of a second magnetic nanoparticle material at a second location of the 3D printing material. The material of the taggant may be one of the encoding parameters. Therefore taggants with similar characteristics but of different material would correspond to a different unit of information.

In some examples the step of embedding may comprise the step of applying the magnetic nanoparticle material on a surface of the 3D printing material. This allows existing filaments to be encoded.

In some examples, the at least first quantity of magnetic nanoparticle material may comprise at least a first fraction of a nanoparticle material coated with a first coating. The at least second quantity of magnetic nanoparticle material may then comprise at least a second fraction of the nanoparticle material coated with a second coating. Coating of the nanoparticle material may be another encoding parameter. Therefore the same material with different coating would correspond to a different unit of information.

In some examples, the at least first quantity of magnetic nanoparticle material may comprise at least a first fraction of a first nanoparticle material coated with a first coating. The at least second quantity of magnetic nanoparticle material may then comprise at least a second fraction of a second nanoparticle material coated with the first coating. The mass fraction of the nanoparticle material may be another encoding parameter. Therefore the same material with different mass fraction would correspond to a different unit of information.

In some examples, the at least first quantity of magnetic nanoparticle material may be embedded in a first zone of the 3D printing material. The at least second quantity of magnetic nanoparticle material may then be embedded in a second zone of the 3D printing material. The magnetic size or diameter of the first zone may be different from the magnetic size or diameter of the second zone. The magnetic size or diameter of the nanoparticle material may be another encoding parameter. Therefore the same material with different magnetic size would correspond to a different unit of information.

In some examples, the at least first quantity of magnetic nanoparticle material may be applied on a first zone of the 3D printing material. The at least second quantity of magnetic nanoparticle material may then be applied on a second zone of the 3D printing material. The size distribution of the at least first quantity of magnetic nanoparticle material in the first zone may be different from the size distribution of the at least second quantity of magnetic nanoparticle material in the second zone. The magnetic size distribution of the nanoparticle material may be another encoding parameter. Therefore the same material with different magnetic size distribution would correspond to a different unit of information.

In some examples, the at least first quantity of magnetic nanoparticle material may be applied on a first zone of the 3D printing material and the at least second quantity of magnetic nanoparticle material may be applied on a second zone of the 3D printing material. The agglomeration of the at least first quantity of magnetic nanoparticle material in the first zone may be different from the agglomeration of the at least second quantity of magnetic nanoparticle material in the second zone. A lack of coating on a taggant of a given particle size may induce the agglomeration of the particles. The resulting nanoparticle material portion will give a magnetic response typical of bigger nanoparticles. Furthermore, the coating may be chosen to individually stabilize the nanoparticles or to induce the formation of clusters of nanoparticles. The magnetic response of individually stabilized nanoparticles may correspond to the expected response of their particle size. For the clusters, the magnetic response may depend on the size of the cluster. Therefore, the kind of coating or its absence may modify the encoding of the magnetic nanoparticle material.

In some examples, the at least first quantity of the first magnetic nanoparticle material may be substantially equal to the at least second quantity of the second magnetic nanoparticle material. This allows for a systematic encoding system or matrix to be generated. However, other quantity combinations may also be possible that may generate different encoding schemes.

In some examples, the 3D printing material may be a flowable material. Said embedding may then comprise the step of distributing a first quantity of at least one magnetic nanoparticle material in the 3D printing material. An even distribution may be desirable. According to the type of flowable material, mixing or stirring might be more appropriate to distribute the nanoparticle material.

In yet another aspect, a method of identifying an encoded 3D printing material blend is disclosed. In a first step, an encoded 3D printing material blend according to examples disclosed herein may be provided. Then the 3D printing material blend may be guided through a magnetic susceptibility sensor. In a next step, an electric parameter of the magnetic susceptibility sensor may be measured. Finally, the measured parameter may be compared with a reference value. The measured parameter may be voltage. The detecting system can be characterized by a frequency transfer function dependent on many factors such as sensors, electronics, geometry and distances etc. In order to relate measured voltage with susceptibility parameters a calibration step may be performed. The calibration measurement may be performed by measuring a sample of a well-known material, this material preferably characterized by a frequency independent susceptibility, e.g. using dysprosium oxide.

In some examples, said measuring an electric property of the magnetic susceptibility sensor may comprise measuring at least a first voltage corresponding to the at least first quantity of the first magnetic nanoparticle material and measuring at least a second voltage corresponding to the at least second quantity of the second magnetic nanoparticle material. A function of said at least first and second measured voltages may correspond to a uniquely identifiable unit of information. Each of the first and second magnetic nanoparticle materials may correspond to a different ETS or TS. A particular combination of the first and second magnetic nanoparticle materials may provide the first and second voltages that may be uniquely associated with the identifiable unit of information.

In some examples, said comparing the measured current with a reference value may comprise comparing the at least first measured voltage with at least a first reference value to associate the corresponding at least first quantity with at least a first numeric value, respectively, and comparing the at least second measured voltage with at least a second reference value to associate the corresponding at least second quantity with at least a second numeric value, respectively. Each numeric value or a combination of the numeric values may correspond to a unit of information. For example, each voltage measurement value may correspond to a uniquely identifiable unit of information. A reference chart or matrix may relate the voltage measurement values with the underlying code.

In some examples, providing the at least one magnetic nanoparticle material may comprise producing a magnetic nanoparticle material by one of the following production methods: (i) batch synthesis, or (i) continuous flow synthesis. In batch synthesis, a given amount of reactants are placed in a closed reactor set-up to make them react for a finite time. Higher amounts of materials are synthesized by using bigger reactors or by repeating the reaction with new reactants. In continuous flow reactors, said particles can be produced inside macro- or micro channelled chambers where reactants flow, temperature, pressure and mixing ratios may be controlled within very narrow ranges. The reaction time is theoretically infinite, for what as-obtained nanoparticles are more homogeneous in crystalline phase and particle size than in batch synthesis.

In some examples, the chemical synthesis method of the magnetic nanoparticle material may comprise one of the following methods: (i) co-precipitation of metallic salts at soft temperature (1-100°C) in basic aqueous media under air or inert atmosphere, (ii) high temperature decomposition of metallic precursors in organic solvents, (iii) microemulsions, or (iv) hydrothermal synthesis. Co-precipitation methods are very simple methods at soft temperature, but the resulting quality of the nanoparticles can be improved by using other synthetic routes, as the ones explained below. In the high temperature decomposition the temperatures range from 200 to 400°C, for what high boiling temperature solvents are needed. The reactants can be metallic salts, organometallic complexes, metallic oxides, metals, etc. The quality of the obtained nanoparticles is very high, in terms of crystallinity, particle size distribution and particle size control. For the microemulsions method, water-in-oil or oil-in-water microemulsions can be used as nanoreactors to synthesize the nanoparticles. Temperatures are limited to ensure the homogeneity of the microemulsion and mass yields are very low.

The hydrothermal synthesis methods take profit of high pressure generated when heating low boiling point solvents (such as water or ethanol) inside an autoclave. It is a very simple method but not easily scalable.

The different chemical routes may be implemented both in batch synthesis and in continuous flow synthesis.

In some examples, providing the at least one magnetic nanoparticle material may comprise producing a magnetic nanoparticle material by a continuous flow process in microreactors. Microreactors are continuous reactors with very narrow channels (from 100 nm to 10 mm width) and preferentially long (from 1 cm to tens of m) through which reactants are pumped. The reaction takes place inside the tube, which can be heated or cooled.

The shape of the section of the channels can be spherical, semi-spherical, squared, custom-made, etc.

The material of the microreactor can be glass, borosilicate glass, quartz, stainless steel, metallic, ceramic, sintered silicon carbide, polymer, etc. Channels can be coated with a hydrophobic or hydrophilic compound or others to avoid their clogging with reaction products. They can be also coated with other materials such as metals to catalyse reactions, for example. Microreactors can bear one or more channels to allow the addition of different reactants or the same reactant in different concentrations. Reactants can be mixed up through a junction, in a laminar or turbulent flow.

Once the reactants go into the tube and start to react, diffusion is often enough to provide adequate mixing in a small flow cross section. Nevertheless, channels may bear specific internal forms designed to promote mixing of reactants or they can also bear active mixing elements (i.e. flexible polymeric material composed with magnetic nanoparticles to yield hair-like cilia structures on the channel walls; these cilia can be activated by external magnets). Mixing can be also achieved by immersing the microreactor in an ultrasonic bath or by using pulsed ultrasound. Both methods also hinder the clogging of the channels. Clogging can be also hindered by pumping a solvent that solubilises the precipitate.

The microreactors can have inlet channels at different positions of the microchannel to allow the entrance of new reactants. It can also bear entrances at the outlet of the reaction area to flow other solvents or reactants at temperatures lower than the reaction temperature, in order to quench the reaction and avoid side-reactions that yield non-desired side-products.

Solid catalysts can be placed inside the microchannels to catalyse the reactions, or they can be adsorbed or grown onto the channel walls. A tube filled with solid catalysts is known as a packed bed or column reactor. Homogeneous catalysts can also be added to the reactants mixture. There are also membrane reactors, in which a liquid and a gas stream can be separated by a semi-permeable membrane. The gas can cross the membrane and enter the stream of liquid reagents.

The liquid reactants can be pumped in a laminar flow or by the generation of droplets, giving rise to a microemulsion. The reactions described herein can be performed in both ways.

In some examples, said producing by continuous flow process in microreactors may comprise the steps of pumping a reactants solution in a channel having a width between 100nm to 10mm , identifying a reaction temperature for said reactants solution, setting a residence time of the reactants solution inside the microreactor and setting the temperature of said channel to the reaction temperature.

The microreactors are heated up or cooled down to the needed reaction temperature that ranges from -100 °C to over 1000 °C, depending on the reactor material. Because of the high surface area to volume ratio, heat transfer is significantly increased compared to batch synthesis (the surface area to volume ratio of a 1 mm diameter tube reactor is approximately fifty times higher than that of a 250 ml round bottom flask). Heat dissipation is also rapid, as there are no temperature gradients. This fact hinders the formation of by-products, for what increased yield and reduced costs are obtained, compared to batch synthesis.

The most efficient way of performing reactions at a given temperature is by pre-heating the microreactor, before pumping in the reactants. Nevertheless, gradual increase or decrease of temperature can be applied while pumping the reactants in order to obtain a given product.

Microreactors can have several areas with different temperatures. For example, reactants can be pre-heated to a temperature lower than the reaction temperature or the products can be cooled down or heated up to a given temperature after the reaction area.

Pressure can be applied up to 400 bar easily, due to the small volume of the microreactors. Reaction temperature can be increased over the boiling temperature of the solvent by increasing the pressure. To work under pressure a back-pressure regulator is placed at the end of the outlet tube, after the reactor.

Flow rate and microreactor volume determines the residence time. Flow rates can range from less than 1 microliter/min up to hundreds of ml/min. Microreactor volume can range from few microliters up to several litres.

Scaling up is done by numbering up the microreactors.

Therefore, the essential elements needed to perform a synthesis of nanoparticles with microreaction technology are:

- a pump (or several pumps, depending on the number of different liquids to flow),
- a microreactor (or several of them, than can be placed parallel or in series, each one of them heated or cooled at a given temperature or each of them having different areas with different temperatures),
- tubing connecting the pump to the microreactor (or connecting microreactors in series) and outlet of the microreactors to enable the controlled collection of the product,
- a heating or cooling device (or several of them, to selectively heat each microreactor).

Additionally, it can have ultrasound agitation, electromagnetic radiation, magnets, electrical connections, etc. to modify the chemical reaction at some point.

As an example of metal based magnetic nanoparticles synthesis, a general description of iron oxide nanoparticle synthesis at high temperature in continuous flow with microreactors is as follows:

First, a mixture of iron precursor, surfactant and solvent, at a given molar ratio of surfactant/iron precursor and at a given concentration of iron precursor, is prepared and homogenised with magnetic stirring or other means of stirring (i.e. ultrasounds, mechanical stirring, etc.) It can be purged with an inert gas, such as argon or nitrogen, as well as the microreactor. Then, the reaction mixture is pumped into a microreactor at a given flow rate (0.001-100 ml/min). The microreactor is previously heated up to the reaction temperature (room temperature to 400°C). Pressure is adjusted between atmospheric pressure and 400 bar. The iron oxide nanoparticles can be collected under argon atmosphere.

Continuous flow chemistry helps the reactants to enter the reactor at the needed reaction temperature, for what the reactants are not heated up progressively, but immediately. This configuration improves the heat and mass transfer, for what reaction yield, selectivity and reproducibility of the main product are substantially increased, as well as the reaction temperature is lowered, compared to batch synthesis.

Said iron precursor (in anhydrous or hydrated forms) may be iron (II) acetylacetonate (Fe(acac)2), iron (III) acetylacetonate (Fe(acac)3), iron (II) acetate (Fe(ac)2), iron (III) acetate (Fe(ac)3), iron (II) chloride (FeCl2), iron (III) chloride (FeCl3), iron (III) nitrate (Fe(NO3)3), iron sulphate (Fe(SO4)2), goethite (FeOOH), iron (III) oleate (Fe(oleate)3), iron (II) stearate (Fe(stearate)2), iron (III) oxide (Fe2O3), iron (III) cupferronate (Fe(PhN(NO)O)3), iron (0) pentacarbonyl (Fe(CO5), etc.

Said surfactant can be lauric acid, myristic acid, palmitic acid, stearic acid, oleic acid, decanoic acid, oleylamine, 2-pyrrolidone, tri-n-octylamine, hexadecylamine, monocarboxyl-terminated poly (ethylene glycol), etc.

Said solvent can be those of high boiling temperature, such as C6-25 ethers, i.e. phenyl ether, octyl ether, hexyl ether, benzyl ether, butyl ether and decyl ether, and the C6-25 aliphatic hydrocarbons, i.e. hexadecene, hexadecane, octadecene, tetracosane and n-eicosane, and C6-25 amine, i.e. tri-n-octylamine, 2-pyrrolidone, oleylamine and hexadecylamine, and C6-25 aromatic, i.e. decalin and mesitylene, and alcohols, i.e. octylalcochol, ethylene glycol, hexadecanol and 1,2-hexadecanediol, and C6-25 carboxylic acids, i.e. oleic acid, stearic acid, palmitic acid, etc.

These compounds should be considered as examples. Other compounds may also be possible.

Other magnetic nanoparticles containing different metals can be synthesized, being these metals: Co, Ni, Ti, Zr, Pt, Pd, Ba, Ca, Sr, Zn, Mn, Ce, Cu, Mg, Cr, Mo, Cd. The metal precursor needed for the synthesis of magnetic nanoparticles can be: chlorides, bromides, fluorides, sulphates, nitrates, fatty acid salts, acetates, acetylacetonates, alkoxides, carbonyl complexes, etc.

Previously to the addition of the synthesized magnetic nanoparticles to the 3D printing material blend, magnetic nanoparticles can be post-processed to narrow the particle size distribution. Physical methods of post-processing, such as high gradient magnetic separators, size-selection chromatography, ultracentrifugation, etc. can be applied. Both as-synthesized magnetic nanoparticles and post-processed magnetic nanoparticles may be used as tagging substances for the 3D printing material blend.

In yet another aspect, a computing device is disclosed. The computing device may comprise a memory and a processor. The memory may store computer program instructions executable by the processor. Said instructions may comprise functionality to execute a method of identifying an encoded 3D printing blend according to examples disclosed herein.

In yet another aspect, a computer program product is disclosed. The computer program product may comprise instructions to provoke that a computing device implements a method of identifying an encoded 3D printing blend according to examples herein. The computer program product may be stored in recording media or carried by a carrier signal. The values obtained by the sensors may be used by the computer program where a function, e.g. a mathematical function, such as interpolation, smoothing, a digital filter, a derivatives function etc. may be used to correlate the values with the units of information. This process permits the unequivocal identification of the code embedded in the 3D printing material blend.

Additional objects, advantages and features of examples of the invention will become apparent to those skilled in the art upon examination of the description, or may be learned by practice of the invention.

BRIEF DESCRIPTION OF THE DRAWINGS

Particular examples of the present invention will be described in the following by way of non-limiting examples, with reference to the appended drawings, in which:

Fig. 1 illustrates a 3D printing material blend according to an example;

Fig. 2a and 2b illustrate examples of AC susceptibility vs excitation frequency charts;

Fig. 3 illustrates another example of an AC susceptibility vs excitation frequency chart;

Fig. 4 illustrates a 3D printing unit configuration according to an example;

Fig. 5 illustrates a 3D printing unit configuration according to another example;

Fig. 6 illustrates a cross section of a detail of a 3D printing unit according to an example;

Fig. 7 illustrates an example of a 3D printing unit where two coils of a sensor are wound in opposite directions;

Fig. 7a shows the equivalent electronic circuit for the configuration of Fig. 7.

DETAILED DESCRIPTION OF EXAMPLES

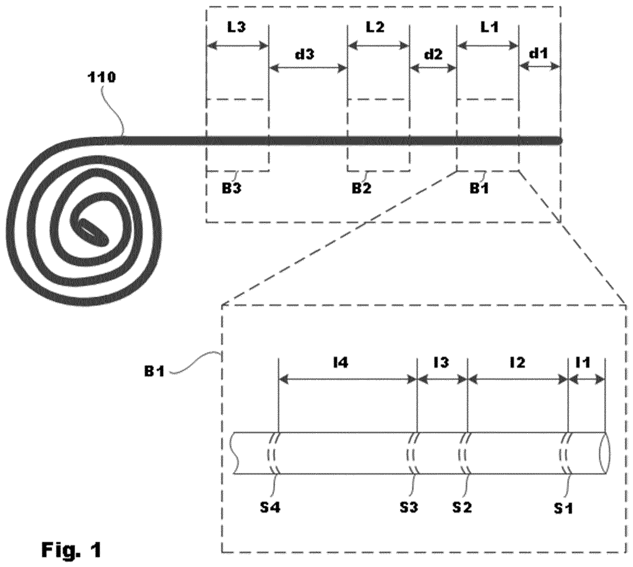

Fig. 1 illustrates a 3D printing material blend according to an example. The 3D printing material blend comprises a filament type 3D printing material ("filament") that is encoded with a superparamagnetic nanoparticle material portion ("taggant"). More specifically, in the example of Fig. 1, the filament 110 comprises a plurality of zones (L1, L2, L3) each zone having a taggant embedded in a particular way. Zone L1 is located a first distance d1 from the tip of the filament. Zone L2 is located a second distance d2 from zone L1. Finally, zone L3 is located a third distance d3 from zone L2. The distance from the tip of the filament until the end of zone L3 may be considered the material code area. Each zone may comprise a distinct distribution of taggants so that each zone may correspond to a distinct code or combination of units of information ("byte") within the code area. An example of such a byte (B1) is illustrated with reference to zone L1 in the magnified portion of Fig. 1. Zone L1 comprises 4 sub-zones or strips where a taggant is embedded in the filament material. The first strip may be located at a distance l1 from the beginning of zone L1. The characteristics of the taggant embedded in the first strip may attribute a single unit of information to the first strip. For example, the first strip S1 may comprise a unique combination of taggant material, coating, magnetic size, magnetic size distribution so that the single unit of information may be unequivocally decoded by a corresponding sensor. Accordingly, the second strip S2 may be located at a distance I2 from the first strip. It may comprise another unique combination of taggant material, coating, magnetic size, magnetic size distribution so that the single unit of information may be unequivocally decoded by a corresponding sensor. The third and fourth strips S3 and S4 may be located at corresponding distances I3 and 14. The code may not only be composed of the units of information but also of the relative position in the filament (that is, it is not possible to decode the code until all the coded filament portion has been decoded). For example, the encoding may be a decimal encoding system and each unit of information may be encoded with digits 0 to 9. A "0" would be the absence of a taggant. The numbers "1" to "9" may correspond to 9 different combinations and distributions of taggant materials. Now, as an example, the space between the beginning of the filament and the first strip (i.e. 11) may correspond to two instances of "0", the first strip may correspond to "1", then the distance I2 to three instances of "0", then the second strip to "2", then another two instances of "0" for the distance 13, then the third strip to "3", then the distance I4 would correspond to four instances of "0" and finally the fourth strip to "4". The final code for zone L1 could, therefore, have the form "001000200300004". Accordingly, the other zones L2 and L3 could have the same or other code.

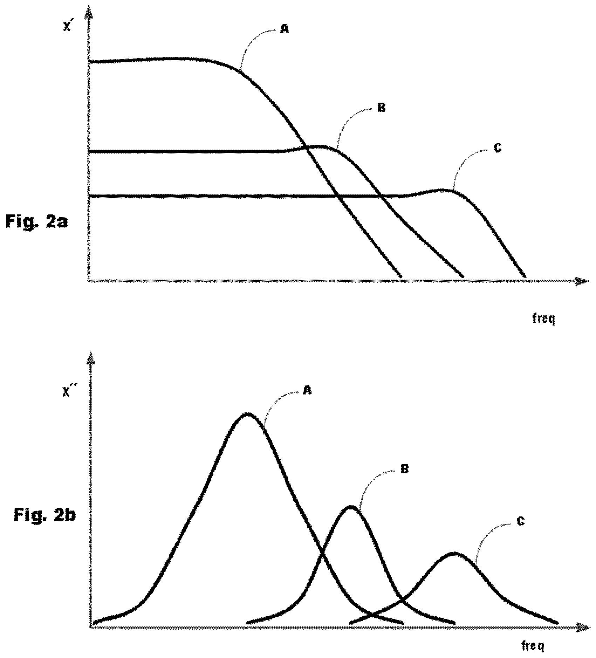

Fig. 2a and 2b illustrate examples of AC susceptibility vs excitation frequency charts (real and imaginary). Figure 2a shows the dependence between the real susceptibility and the excitation frequency and Fig. 2b shows the dependence between the imaginary susceptibility and the excitation frequency. Each characteristic (A, B and C) shown in Fig. 2a and Fig. 2b, may correspond to a different taggant. Therefore, for a particular excitation frequency, each taggant may demonstrate a distinct AC susceptibility. Unless the frequency coincides with an intersection of the characteristics, it is possible to uniquely identify each taggant with a single excitation frequency. The magnitude of the measured magnetic moment, as well as its phase shift (or delay) with respect to the externally applied field, may depend on the characteristics of the sample and on the frequency of the external field.

For filament type materials said characteristic depends on several properties of the embedded nanoparticles:

- their chemical composition;
- their average magnetic particle size;
- their agglomeration state;
- their magnetic size distribution; and
- the coating and surfactants used.

For flowable materials the AC susceptibility of each and every permissible taggant shows a unique characteristic when plotted against the external field frequency. Said characteristic depends on several properties of the magnetic nanoparticles within each ETS (as described above), as well as on the relative mass fraction of each ETS within the taggant.

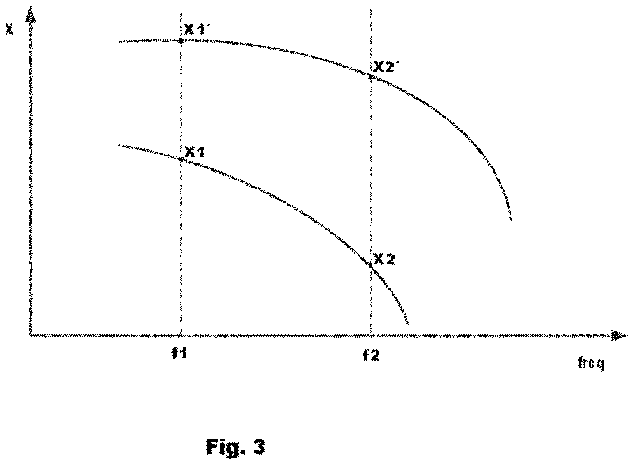

Fig. 3 illustrates another example of an AC susceptibility vs excitation frequency chart. In the chart of Fig. 3, at least two measurements are taken between two distinct frequencies for each taggant. A slope may then be calculated for the measured points. Each slope may correspond to a particular taggant. Alternatively, a function of the at least two AC susceptibilities and the slope may be used to uniquely identify the taggant. This method of identifying a taggant reduces the possibility of mis-identifying a taggant. As AC susceptibility characteristics may intersect at certain frequencies, it may be difficult to identify the taggant only by a single frequency. The use of multiple frequencies and the identification of multiple corresponding AC susceptibility values may allow matching of the measured values with predefined AC susceptibility characteristics, thus minimising the possibility of error. In the example of Fig. 3, at a first frequency f1 two values x1 and x1' are measured. Then at a second frequency two more values x2 and x2' are measured. The slope, S, of the AC susceptibility vs. frequency characteristic in a given frequency range may be used as a unique fingerprint to identify the taggant. The slope may be given by the equation:

$$ S = \frac{\chi_2 - \chi_1}{f_2 - f_1} \qquad \text{Eq. 4} $$

where $f_1$ and $f_2$ are the prescribed frequencies of the external alternating magnetic field, and $\chi 1$ and $\chi 2$ are the AC susceptibility values measured at frequencies $f_1$ and $f_2$ respectively. The calculated slope values may be compared with reference slope values to identify each taggant.

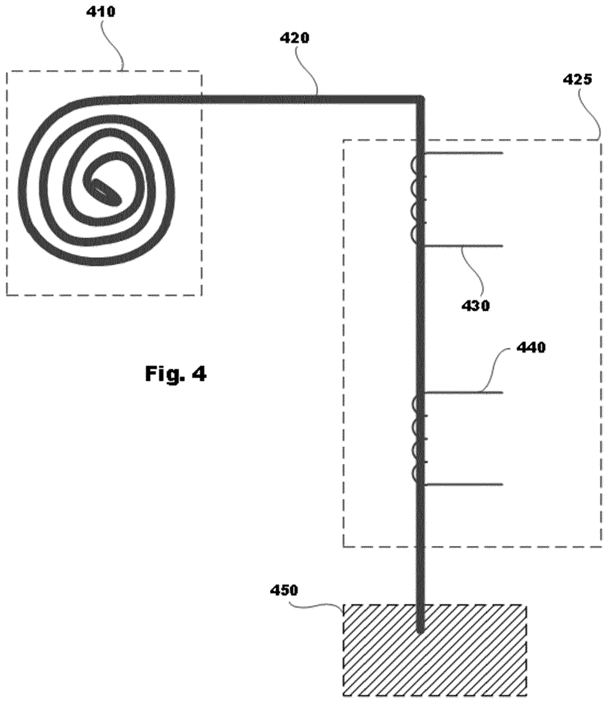

Fig. 4 illustrates a 3D printing unit configuration according to an example. A filament holder 410, e.g. a reel, supports a 3D printing material blend 420 in the form of a filament. At least a portion of the 3D printing material blend 420 may comprise a superparamagnetic taggant. The filament may then be passed through an identification unit 425 before reaching a heating unit 450 of a 3D printer. The identification unit 425 may comprise a first sensor 430 and a second sensor 440. The first sensor 430 may be tuned at a first excitation frequency f1 (or at a first excitation range) and the second sensor 440 may be tuned at a second excitation frequency $f_2$ (or second excitation range). As an encoded portion of the filament passes through the first sensor 430, the first sensor records a first AC susceptibility value $x_1$. When the same encoded portion of the filament passes through the second sensor 440, the second sensor records a second AC susceptibility value $x_2$. By calculating a function between the two values, e.g. the slope, it is possible to identify the superparamagnetic taggant in the 3D printing material blend. However, one skilled in the art may appreciate that other functions may be used to identify the taggant. Furthermore, more sensors may be required to identify more complex encoding structures.

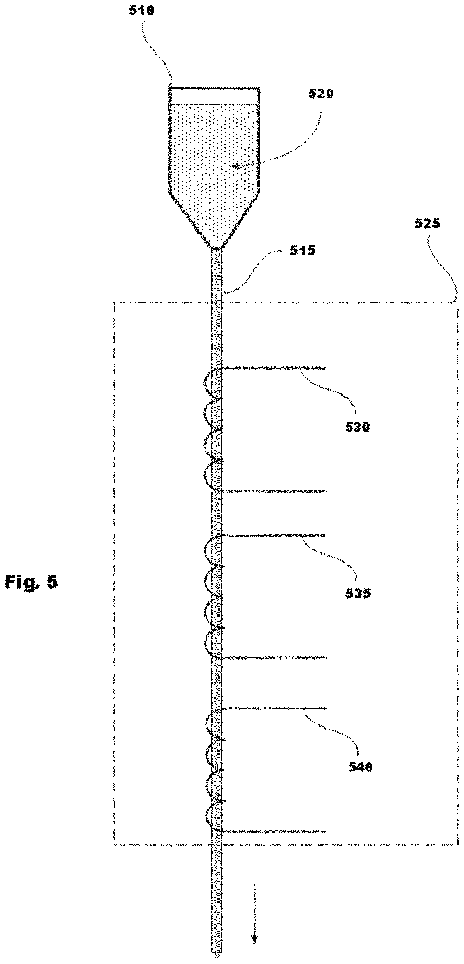

Fig. 5 illustrates a 3D printing unit configuration according to another example. A cartridge 510 comprises a 3D printing material blend 520 in the form of a resin. At least a portion of the 3D printing material blend 520 may comprise a superparamagnetic taggant. The resin may then be passed, with the help of a conduit 515, through an identification unit 525 before reaching an injector of a 3D printer (not shown). The identification unit 525 may comprise a first sensor 530, a second sensor 535 and a third sensor 540. In other implementations the sensors may be arranged with the cartridge 510. The first sensor 530 may be tuned to a first excitation frequency $f_1$ (or frequency range), the second sensor 535 may be tuned to a second excitation frequency $f_2$ (or frequency range) and the third sensor 540 may be tuned to a third excitation frequency $f_3$ (or frequency range). As an encoded portion of the resin passes through the first sensor 530, the first sensor records a first AC susceptibility value $x_1$. When the same encoded portion of the resin passes through the second sensor 535, the second sensor records a second AC susceptibility value $x_2$. Finally, when the same encoded portion of the resin passes through the third sensor 540, the third sensor records a third AC susceptibility value $x_3$. By calculating a function between the three values, it is possible to identify the superparamagnetic taggant in the 3D printing blend.

A coding system and associated authentication method to identify 3D printing materials as described herein may be used to protect the 3D printing material and/or the 3D printed objects from forgery. As the nanoparticle taggants may remain in the material after printing it is possible to apply hidden coded signatures to the 3D printed objects.

For filament type materials very large numbers of codes may be generated thanks to:

- the large number of permissible samples (by varying the chemical composition, coating, average magnetic size and magnetic size distribution), which in turn lead to a large number of individual bit values;
- the mixing between different materials and/or different magnetic sizes of the same material, and/or different coatings for the same materials.
- the large number of possible bytes (i.e. combinations of bits);
- the large number of possible byte combinations;
- the distance between bits and bytes;

For flowable material large numbers of codes (i.e. tagging substances or TS) may be generated thanks to:

- the large number of permissible elementary tagging substances (ETS) (by varying the chemical composition of the MNPs, their coating, average magnetic size and magnetic size distribution);
- the large number of possible combinations of ETS and relative mass fraction of each of them.

Magnetic characteristic of the ETS contained in the filaments and/or flowable materials may be obtained through an indirect measure of their complex magnetic AC susceptibility. This measure may be used to identify the unique magnetic fingerprint of interest of the sample.

Another important parameter to be taken into account when choosing a detection method is sensitivity, as the smaller the mass of the sample to be detected the better for maintaining the characteristics of the 3D printing material.

- Different AC susceptibility techniques may be applied to get this information such as AC sweep or an external pulsed magnetic field.
- It may also be important to measure the DC magnetic characteristic of the sample.

The AC detection method described herein is based on induction and consist of at least two coil based inductive sensors. The time-dependent magnetic moment of the sample induces a voltage in the pickup coils of the inductive sensors. Said voltage can be measured and used to determine the magnetic susceptibility of the sample at the frequency of the externally applied alternating magnetic field.

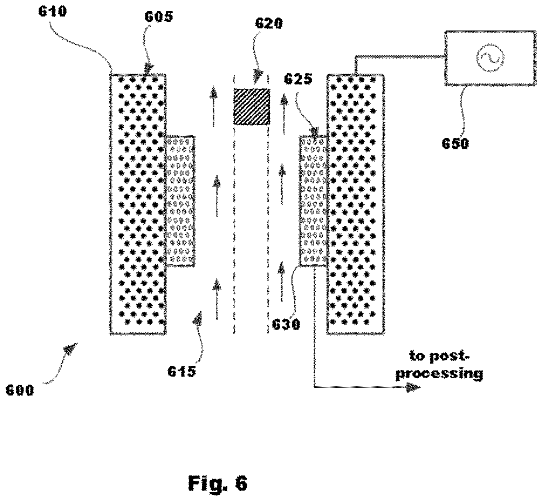

Fig. 6 illustrates a cross section of a detail of a 3D printing unit according to an example. AC current from an AC source 650 flowing through the coils 605 of excitation element 610 generates an AC field 615. Presence of a 3D printing material blend 620 changes the magnetic flux and thereby the induced voltage in detecting coil 625 of detecting element 630. Excitation element 610 and detecting element 630 comprise a sensor of 3D printing unit 600. As the 3D printing material blend passes through the sensor 600, the induced voltage changes in the detecting coil 625. These changes may be recorded by a post processing unit (not shown) so that the AC susceptibility may be calculated and, e.g., compared with stored AC susceptibility values to identify the taggant.

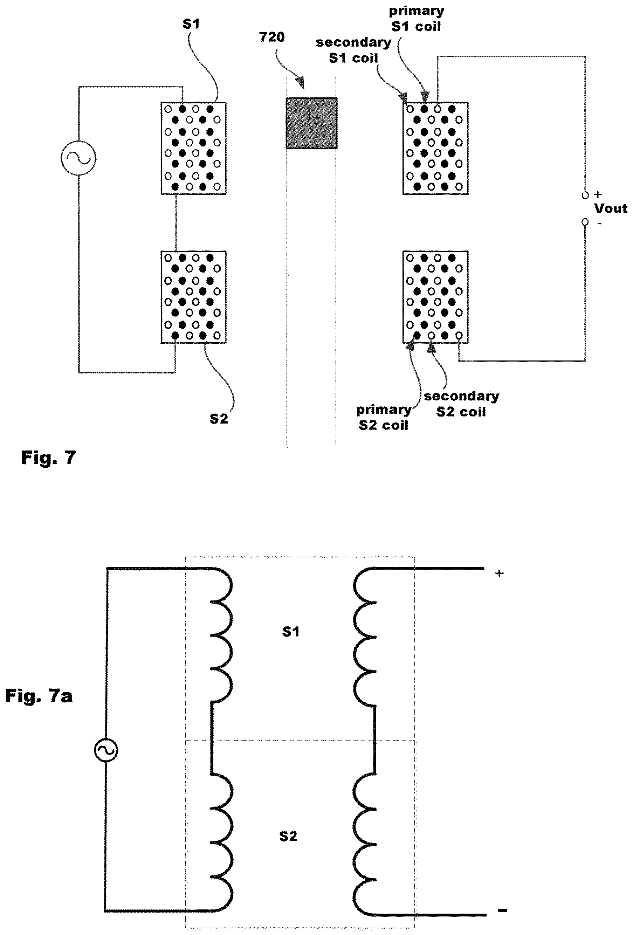

In order to obtain good sensitivity a balanced system of coils may be used. Voltage read by the detection circuit may then be ideally zero when there is no taggant material close to one of the sensing elements. In a configuration with two detecting coils this can be achieved by wounding the ideally equal coils in opposite direction. Fig. 7 illustrates an example of a 3D printing unit where two coils of each sensor are wound in opposite directions. Sensor S1 has a primary coil and a secondary coil. Sensor S2 also has a primary coil and a secondary coil. The AC power source is coupled between the primary coil of sensor S1 and the primary coil of sensor S2. As the 3D printing material blend portion 720 travels through the sensors, the output voltage is measured between the secondary coil of sensor S1 and the secondary coil of sensor S2. The measured voltage may be used by a post-processing analyser (not shown) to identify the taggant. Fig. 7a shows the equivalent electronic circuit for the configuration of Fig. 7.

Even though the detecting coils are matched, there may be manufacturing differences that may lead to a non-zero voltage with a magnitude and phase dependent on frequency. In order to sweep in a wide range of frequencies some kind of tuning technique might be necessary. This may be a key to increase the sensibility of the system in several orders of magnitude.

An example lookup table, where only two elementary tagging substances are used is shown in the following page.

| Associated TS code | Material | Coating | Mean magnetic diameter (nm) | Magnetic Size distribution, STD (%) | Mass fraction (%) | Material | Coating | Mean magnetic diameter (nm) | Magnetic Size distribution, STD (%) | Mass fraction (%) |
|---|---|---|---|---|---|---|---|---|---|---|
| 1 | Fe$_3$O$_4$ | #1 | 5 | 10 | 100 | - | - | - | - | 0 |
| 2 | Fe$_3$O$_4$ | #1 | 8 | 10 | 100 | - | - | - | - | 0 |
| 3 | Fe$_3$O$_4$ | #1 | 5 | 5 | 100 | - | - | - | - | 0 |
| 4 | Fe$_3$O$_4$ | #1 | 8 | 5 | 100 | - | - | - | - | 0 |
| 5 | Fe$_3$O$_4$ | #2 | 5 | 10 | 100 | - | - | - | - | 0 |
| 6 | Fe$_3$O$_4$ | #2 | 8 | 10 | 100 | - | - | - | - | 0 |
| 7 | Fe$_3$O$_4$ | #2 | 5 | 5 | 100 | - | - | - | - | 0 |
| 8 | Fe$_3$O$_4$ | #2 | 8 | 5 | 50 | Fe$_3$O$_4$ | #2 | 18 | 5 | 50 |
| 9 | - | - | - | - | 0 | MnO | #1 | 12 | 10 | 100 |
| 10 | - | - | - | - | 0 | MnO | #1 | 18 | 10 | 100 |
| 11 | - | - | - | - | 0 | MnO | #1 | 12 | 5 | 100 |
| 12 | - | - | - | - | 0 | MnO | #1 | 18 | 5 | 100 |
| 13 | - | - | - | - | 0 | MnO | #2 | 12 | 10 | 100 |
| 14 | - | - | - | - | 0 | MnO | #2 | 18 | 10 | 100 |
| 15 | - | - | - | - | 0 | MnO | #2 | 12 | 5 | 100 |
| 16 | - | - | - | - | 0 | MnO | #2 | 18 | 5 | 100 |
| 17 | Fe$_3$O$_4$ | #1 | 5 | 10 | 50 | MnO | #1 | 12 | 10 | 50 |
| 18 | Fe$_3$O$_4$ | #1 | 8 | 10 | 50 | MnO | #1 | 18 | 10 | 50 |
| 19 | Fe$_3$O$_4$ | #1 | 5 | 5 | 50 | MnO | #1 | 12 | 5 | 50 |
| 20 | Fe$_3$O$_4$ | #1 | 8 | 5 | 50 | MnO | #1 | 18 | 5 | 50 |
| 21 | Fe$_3$O$_4$ | #2 | 5 | 10 | 50 | MnO | #2 | 12 | 10 | 50 |
| 22 | Fe$_3$O$_4$ | #2 | 8 | 10 | 50 | MnO | #2 | 18 | 10 | 50 |
| 23 | Fe$_3$O$_4$ | #2 | 5 | 5 | 50 | MnO | #2 | 12 | 5 | 50 |
| 24 | Fe$_3$O$_4$ | #2 | 8 | 5 | 50 | MnO | #2 | 18 | 5 | 50 |

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

Further, although the embodiments of the invention described with reference to the drawings comprise computer apparatus and processes performed in computer apparatus, the invention also extends to computer programs, particularly computer programs on or in a carrier, adapted for putting examples of the disclosure into practice. The program may be in the form of source code, object code, a code intermediate source and object code such as in partially compiled form, or in any other form suitable for use in the implementation of the processes according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means. Further, the program may be stored on one or more servers, which maintain a shared database of program data accessible from multiple devices. Storage of a database on one or more servers in this way is referred to as cloud-based storage, or storage in the cloud. Cloud-based storage of program data enables a user to access a single instance of the data from different devices.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

**Claims**

1. A 3D printing material blend, configured to be used in a 3D printer, comprising:

   a 3D printing material portion;
   a magnetic nanoparticle portion;
   wherein the magnetic nanoparticle portion is embedded in the 3D printing material portion in such a way that the 3D printing material blend is encoded with a uniquely identifiable predetermined code, **characterized in that** the magnetic nanoparticle portion comprises:

   (i) a magnetic field amplitude dependent magnetic moment or susceptibility, or
   (ii) a frequency-dependent magnetic susceptibility, and

   wherein the predetermined code is related to one or more characteristics of said nanoparticles that affect said magnetic moment or susceptibility.

2. The 3D printing material blend according to claim 1, wherein said one or more characteristics are selected from the following or a combination thereof:

   a. a concentration of said nanoparticles;
   b. a chemical composition of said nanoparticles;
   c. a particle diameter of the nanoparticles;
   d. a particle size distribution of the nanoparticles; and
   e. an agglomeration of the nanoparticles.

3. The 3D printing material blend according to claim 1 or 2, wherein said 3D printing material portion is a filament type material or a flowable type material.

4. The 3D printing material blend according to any of claims 1 - 3, wherein said magnetic nanoparticle portion is distributed:

   a. in a predetermined spatial sequence and/or pattern in the 3D printing filament type material, or
   b. evenly in the flowable type material,

   so that the predetermined code contains one or more uniquely identifiable units of information.

5. A 3D printing unit comprising:

a holder, configured to be coupled to a 3D printer, the holder supporting a 3D printing material blend according to any of previous claims,
wherein the 3D printing material blend is arranged with the holder so that the 3D printing material blend is configured to be provided to the 3D printer,
wherein the 3D printing unit further comprises a uniquely identifiable code associated with the uniquely identifiable code of the 3D printing material blend, and
wherein the 3D printing unit comprises a 3D printing cartridge or a filament reel.

6. The 3D printing unit according claim 5, further comprising one or more sensors, configured to determine a magnetic susceptibility of the 3D printing material blend at a predefined frequency or frequencies, or range of frequencies, each of the one or more sensors comprising at least one excitation coil and at least one detection coil, and wherein AC current flowing through the excitation coil generates an AC field that changes magnetic flux in the presence of the 3D printing material blend, thereby modifying an induced voltage in the detection coil.

7. A 3D printing system comprising:

a 3D printer;
one or more 3D printing units according to any of claims 5 to 6 , coupled to said 3D printer, and
a plurality of sensors, configured to determine the magnetic susceptibility of the 3D printing material blend at a predefined frequency or frequencies, or range of frequencies.

8. A method of encoding a 3D printing material blend according to any of claims 1 to 4, comprising:

providing a 3D printing material;
providing at least one magnetic nanoparticle material; and
embedding at least a portion of the magnetic nanoparticle material in at least a portion of the 3D printing material to generate the encoded 3D printing material blend,
wherein said 3D printing material is a filament type material and said embedding comprises prescribing one or more locations in the 3D printing material and embedding the magnetic nanoparticle material in said one or more prescribed locations.

9. The method according to claim 8, wherein said embedding further comprises:

providing at least a first quantity of a first magnetic nanoparticle material at a first location of the 3D printing material; and
providing at least a second quantity of a second magnetic nanoparticle material at a second location of the 3D printing material.

10. The method according to any of claims 9, wherein at least a first quantity of magnetic nanoparticle material is embedded in a first zone of the 3D printing material and at least a second quantity of magnetic nanoparticle material is embedded on a second zone of the 3D printing material, wherein the magnetic size or diameter of the first zone is different from the magnetic size or diameter of the second zone.

11. A method of identifying an encoded 3D printing material blend, comprising:

providing an encoded 3D printing material blend encoded according to the method of any of claims 8 - 10;
guiding the 3D printing material blend through a magnetic susceptibility sensor;
measuring an electric parameter of the magnetic susceptibility sensor; and
comparing the measured electric parameter with a reference value.

12. The method according to claim 11, wherein said measuring an electric parameter of the magnetic susceptibility sensor comprises:

measuring at least a first voltage corresponding to at least a first quantity of a first magnetic nanoparticle material at a first location of the 3D printing material; and
measuring at least a second voltage corresponding to the at least second quantity of the second magnetic nanoparticle material at a second location of the 3D printing material,
wherein a function of said at least first and second measured voltages corresponds to a uniquely identifiable unit of information.

13. The method according to claim 12, wherein said comparing the measured electric parameter with a reference value comprises:

comparing the at least first measured voltage with at least a first reference value to associate the corresponding at least first quantity with at least a first numeric value, respectively; and
comparing the at least second measured voltage with at least a second reference value to associate the corresponding at least second quantity with at least a second numeric value, respectively,
wherein each numeric value or a combination of the numeric values corresponds to a unit of information.

14. A computing device comprising a memory and a processor, wherein the memory stores computer program instructions executable by the processor, said instructions comprising functionality to execute a method of identifying an encoded 3D printing material blend according to any of claims 1 to 4.

15. A computer program product comprising instructions to provoke that a computing device implements a method of identifying an encoded 3D printing material blend according to any of claims 1 to 4.

**Patentansprüche**

1. Eine 3D-Druckmaterialmischung, die konfiguriert ist, um in einem 3D-Drucker verwendet zu werden, umfassend:

einen 3D-Druckmaterialteil;
einen Teil magnetischer Nanopartikeln;
wobei der Teil magnetischer Nanopartikeln im 3D-Druckmaterialteil derart eingebettet ist, dass die 3D-Druckmaterialmischung mit einem eindeutig identifizierbaren vorherbestimmten Code codiert ist,
**dadurch gekennzeichnet, dass** der Teil magnetischer Nanopartikeln folgendes umfasst:

(i) ein magnetisches Moment oder eine magnetische Suszeptibilität, das bzw. die von der Amplitude des Magnetfeldes abhängig ist, oder
(ii) eine von der Frequenz abhängige magnetische Suszeptibilität, und wobei der vorherbestimmte Code auf eine oder auf mehrere Eigenschaften der Nanopartikeln bezogen ist, welche das magnetische Moment oder die magnetische Suszeptibilität beeinflussen.

2. Die 3D-Druckmaterialmischung nach Anspruch 1, wobei die eine oder die mehreren Eigenschaften aus den folgenden oder aus einer Kombination davon ausgewählt sind:

a. einer Konzentration der Nanopartikeln;
b. einer chemischen Zusammensetzung der Nanopartikeln;
c. einem Partikeldurchmesser der Nanopartikeln;
d. einer Partikelgrößenverteilung der Nanopartikeln; und
e. einer Agglomeration der Nanopartikeln.

3. Die 3D-Druckmaterialmischung nach Anspruch 1 oder 2, wobei der 3D-Druckmaterialteil ein fadenartiges Material oder ein fließfähiges Material ist.

4. Die 3D-Druckmaterialmischung nach einem der Ansprüche 1 - 3, wobei der Teil magnetischer Nanopartikeln wie folgt verteilt ist:

a. in einer vorherbestimmten räumlicher Sequenz und/oder Muster im fadenartigen 3D-Druckmaterial, oder
b. gleichmäßig im fließfähigen Material,

so dass der vorherbestimmte Code eine oder mehrere eindeutig identifizierbare Informationseinheiten enthält.

5. Eine 3D-Druckeinheit umfassend:

einen Halter, der konfiguriert ist, um an einen 3D-Drucker gekoppelt zu werden, wobei der Halter eine 3D-Druckmaterialmischung nach einem der vorhergehenden Ansprüche unterstützt,

wobei die 3D-Druckmaterialmischung mit dem Halter derart angeordnet ist, dass die 3D-Druckmaterialmischung konfiguriert ist, um den 3D-Drucker mit dieser zu versorgen,

wobei die 3D-Druckeinheit weiterhin einen eindeutig identifizierbaren Code umfasst, der mit dem eindeutig identifizierbaren Code der 3D-Druckmaterialmischung verknüpft ist, und

wobei die 3D-Druckeinheit eine 3D-Druckpatrone oder eine Fadenrolle umfasst.

6. Die 3D-Druckeinheit nach Anspruch 5, weiterhin umfassend einen oder mehrere Sensoren, der bzw. die konfiguriert ist bzw. sind, um eine magnetische Suszeptibilität der 3D-Druckmaterialmischung bei einer vorherbestimmten Frequenz oder Frequenzen, oder Frequenzbereich, festzustellen, wobei jeder von dem einen oder mehreren Sensoren mindestens eine Erregerspule und mindestens eine Erfassungsspule umfasst, und wobei Wechselstrom, der durch die Erregerspule fließt ein Wechselstromfeld erzeugt, das den Magnetfluss in Gegenwart der 3D-Druckmaterialmischung verändert, wodurch eine induzierte Spannung in der Erfassungsspule verändert wird.

7. Ein 3D-Drucksystem umfassend:

einen 3D-Drucker;

eine oder mehrere 3D-Druckeinheiten nach einem der Ansprüche 5 bis 6, die an den 3D-Drucker gekoppelt sind, und

eine Vielzahl von Sensoren, die konfiguriert sind, um die magnetische Suszeptibilität der 3D-Druckmaterialmischung bei einer vorherbestimmten Frequenz oder Frequenzen, oder Frequenzbereich, festzustellen.

8. Ein Verfahren zur Codierung von einer 3D-Druckmaterialmischung nach einem der Ansprüche 1 bis 4, umfassend:

das Bereitstellen von einem 3D-Druckmaterial;

das Bereitstellen von mindestens einem magnetischen Nanopartikelmaterial; und

das Einbetten von mindestens einem Teil des magnetischen Nanopartikelmaterials in mindestens einem Teil des 3D-Druckmaterials, um die codierte 3D-Druckmaterialmischung zu erzeugen,

wobei das 3D-Druckmaterial ein fadenartiges Material ist und das Einbetten das Bestimmen von einer oder von mehreren Stellen im 3D-Druckmaterial und das Einbetten des magnetischen Nanopartikelmaterials in der einen oder den mehreren bestimmten Stellen umfasst.

9. Das Verfahren nach Anspruch 8, wobei das Einbetten folgendes umfasst:

das Bereitstellen von mindestens einer ersten Menge von einem ersten magnetischen Nanopartikelmaterial an einer ersten Stelle des 3D-Druckmaterials; und

das Bereitstellen von mindestens einer zweiten Menge von einem zweiten magnetischen Nanopartikelmaterial an einer zweiten Stelle des 3D-Druckmaterials.

10. Das Verfahren nach einem der Ansprüche 9, wobei mindestens eine erste Menge des magnetischen Nanopartikelmaterials in einem ersten Bereich des 3D-Druckmaterials eingebettet ist und mindestens eine zweite Menge des magnetischen Nanopartikelmaterials in einem zweiten Bereich des 3D-Druckmaterials eingebettet ist, wobei die magnetische Größe oder der magnetische Durchmesser des ersten Bereichs verschieden von der magnetischen Größe oder dem magnetischen Durchmesser des zweiten Bereichs ist.

11. Ein Verfahren zur Identifizierung von einer codierten 3D-Druckmaterialmischung, umfassend:

das Bereitstellen von einer codierten 3D-Druckmaterialmischung, die nach dem Verfahren von einem der Ansprüche 8 - 10 codiert worden ist;

das Führen von der 3D-Druckmaterialmischung durch einen Sensor magnetischer Suszeptibilität;

das Messen von einem elektrischen Parameter des Sensors magnetischer Suszeptibilität; und

das Vergleichen von dem gemessenen elektrischen Parameter mit einem Bezugswert.

12. Das Verfahren nach Anspruch 11, wobei das Messen von einem elektrischen Parameter des Sensors magnetischer Suszeptibilität folgendes umfasst:

das Messen von mindestens einer ersten Spannung entsprechend mindestens einer ersten Menge von einem

EP 3 152 032 B1

ersten magnetischen Nanopartikelmaterial an einer ersten Stelle des 3D-Druckmaterials; und
das Messen von mindestens einer zweiten Spannung entsprechend der mindestens zweiten Menge des zweiten magnetischen Nanopartikelmaterials an einer zweiten Stelle des 3D-Druckmaterials,
wobei eine Funktion der mindestens ersten und zweiten gemessenen Spannungen einer eindeutig identifizierbaren Informationseinheit entspricht.

13. Das Verfahren nach Anspruch 12, wobei das Vergleichen von dem gemessenen elektrischen Parameter mit einem Bezugswert folgendes umfasst:

das Vergleichen von der mindestens ersten gemessenen Spannung mit mindestens einem ersten Bezugswert, um die entsprechende mindestens erste Menge jeweils mit mindestens einem ersten numerischen Wert zu verknüpfen; und
das Vergleichen von der mindestens zweiten gemessenen Spannung mit mindestens einem zweiten Bezugswert, um die entsprechende mindestens zweite Menge jeweils mit mindestens einem zweiten numerischen Wert zu verknüpfen,
wobei jeder numerischer Wert oder eine Kombination von den numerischen Werten einer Informationseinheit entspricht.

14. Eine Computervorrichtung umfassend einen Speicher und einen Prozessor, wobei der Speicher Computerprogrammanweisungen speichert, die durch den Prozessor ausführbar sind, wobei die Anweisungen Funktionalität zur Ausführung von einem Verfahren zum Identifizieren von einer codierten 3D-Druckmaterialmischung nach einem der Ansprüche 1 bis 4 umfassen.

15. Ein Computerprogrammprodukt umfassend Anweisungen, um die Implementierung von einem Verfahren zum Identifizieren von einer codierten 3D-Druckmaterialmischung nach einem der Ansprüche 1 bis 4 durch eine Computervorrichtung hervorzurufen.

**Revendications**

1. Un mélange de matériaux d'impression 3D, configuré pour son utilisation dans une imprimante 3D, comprenant :

une partie de matériau d'impression 3D ;
une partie de nanoparticules magnétiques ;
dans lequel la partie de nanoparticules magnétiques est incorporée dans la partie de matériau d'impression 3D de façon que le mélange de matériaux d'impression 3D est encodé avec un code prédéterminé identifiable de façon distincte,
**caractérisé en ce que** la partie de nanoparticules magnétiques comprend :

(i) un moment ou une susceptibilité magnétique dépendant(e) de l'amplitude de champ magnétique, ou
(ii) une susceptibilité magnétique dépendante de la fréquence, et

dans lequel le code prédéterminé est lié à une ou à plusieurs caractéristiques desdites nanoparticules qui influent sur ledit moment ou ladite susceptibilité magnétique.

2. Le mélange de matériaux d'impression 3D selon la revendication 1, dans lequel ladite une ou lesdites plusieurs caractéristiques sont choisies parmi les suivantes ou une combinaison de celles-ci :

a. une concentration desdites nanoparticules ;
b. une composition chimique desdites nanoparticules ;
c. un diamètre de particule des nanoparticules ;
d. une distribution de la taille des particules des nanoparticules ; et
e. une agglomération des nanoparticules.

3. Le mélange de matériaux d'impression 3D selon la revendication 1 ou 2, dans lequel ladite partie de matériau d'impression 3D est un matériau de type filament ou un matériau de type fluide.

4. Le mélange de matériaux d'impression 3D selon l'une quelconque des revendications 1 - 3, dans lequel ladite partie

de nanopartiques magnétiques est distribuée :

    a. en une séquence et/ou motif spatial(e) prédéterminé(e) dans le matériau de type filament d'impression 3D, ou
    b. uniformément dans le matériau de type fluide,

de sorte que le code prédéterminé contient une ou plusieurs unités d'information identifiables de façon distincte.

5. Une unité d'impression 3D comprenant :

    un support, configuré de manière à être couplé à une imprimante 3D, le support supportant un mélange de matériaux d'impression 3D selon l'une quelconque des revendications précédentes,
    dans lequel le mélange de matériaux d'impression 3D est disposé avec le support de sorte que le mélange de matériaux d'impression 3D est configuré de manière à être fourni à l'imprimante 3D,
    dans lequel l'unité imprimante 3D comprend en outre un code identifiable de façon distincte associé au code identifiable de façon distincte du mélange de matériaux d'impression 3D, et
    dans lequel l'unité d'impression 3D comprend une cartouche d'impression 3D ou une bobine de filaments.

6. L'unité d'impression 3D selon la revendication 5, comprenant en outre un ou plusieurs capteurs, configuré(s) de manière à déterminer une susceptibilité magnétique du mélange de matériaux d'impression 3D à une fréquence ou des fréquences, ou intervalle de fréquences, prédéterminée(s), chacun de l'un ou des plusieurs capteurs comprenant au moins une bobine d'excitation et au moins une bobine de détection, et dans lequel du courant alternatif circulant à travers la bobine d'excitation génère un champs de courant alternatif que fait varier le flux magnétique en présence du mélange de matériaux d'impression 3D, modifiant ainsi une tension induite dans la bobine de détection.

7. Un système d'impression 3D comprenant:

    une imprimante 3D ;
    une ou plusieurs unités d'impression 3D selon l'une quelconque des revendications 5 à 6, couplée(s) à ladite imprimante 3D, et
    une pluralité de capteurs, configurés de manière à déterminer la susceptibilité magnétique du mélange de matériaux d'impression 3D à une fréquence ou à des fréquences, ou à un intervalle de fréquences, prédéfinie(s).

8. Un procédé d'encodage d'un mélange de matériaux d'impression 3D selon l'une quelconque des revendications 1 à 4, comprenant :

    fournir un matériau d'impression 3D ;
    fournir au moins un matériau nanoparticulaire magnétique; et
    incorporer au moins une partie du matériau nanoparticulaire magnétique dans au moins une partie du matériau d'impression 3D afin de générer le mélange de matériaux d'impression 3D encodé,
    dans lequel ledit matériau d'impression 3D est un matériau de type filament et ledit encodage comprend fixer un ou plusieurs endroits dans le matériau d'impression 3D et incorporer le matériau nanoparticulaire magnétique dans ledit un ou lesdits plusieurs endroits fixés.

9. Le procédé selon la revendication 8, dans lequel ladite incorporation comprend en outre :

    fournir au moins une première quantité d'un premier matériau nanoparticulaire magnétique dans un premier endroit du matériau d'impression 3D ; et
    fournir au moins une seconde quantité d'un second matériau nanoparticulaire magnétique dans un second endroit du matériau d'impression 3D.

10. Le procédé selon l'une quelconque des revendications 9, dans lequel au moins une première quantité de matériau nanoparticulaire magnétique est incorporée dans une première région du matériau d'impression 3D et au moins une seconde quantité de matériau nanoparticulaire magnétique est incorporée dans une seconde région du matériau d'impression 3D, dans lequel la taille ou le diamètre magnétique de la première région est différent(e) de la taille ou le diamètre magnétique de la seconde région.

11. Un procédé d'identification d'un mélange de matériaux d'impression 3D, comprenant:

fournir un mélange de matériaux d'impression 3D encodé qui a été encodé selon le procédé de l'une quelconque des revendications 8 - 10 ;

guider le mélange de matériaux d'impression 3D à travers un capteur de susceptibilité magnétique ;

mesurer un paramètre électrique du capteur de susceptibilité magnétique ; et

comparer le paramètre électrique mesuré à une valeur de référence.

12. Le procédé selon la revendication 11, dans lequel ladite mesure d'un paramètre électrique du capteur de susceptibilité magnétique comprend :

mesurer au moins une première tension correspondante à au moins une première quantité d'un premier matériau nanoparticulaire magnétique dans un premier endroit du matériau d'impression 3D ; et

mesurer au moins une seconde tension correspondante à l'au moins seconde quantité du second matériau nanoparticulaire magnétique dans un second endroit du matériau d'impression 3D,

dans lequel une fonction desdites au moins première et seconde tensions mesurées correspond à une unité d'information identifiable de façon distincte.

13. Le procédé selon la revendication 12, dans lequel ladite comparaison du paramètre électrique mesuré à une valeur de référence comprend :

comparer l'au moins première tension mesurée à au moins une première valeur de référence afin d'associer l'au moins première quantité correspondante à au moins une première valeur numérique, respectivement ; et

comparer l'au moins seconde tension mesurée à au moins une seconde valeur de référence afin d'associer l'au moins seconde quantité correspondante à au moins une seconde valeur numérique, respectivement,

dans lequel chaque valeur numérique ou une combinaison des valeurs numériques corresponde à une unité d'information.

14. Un dispositif informatique comprenant une mémoire et un processeur, dans lequel la mémoire stocke des instructions de programme informatique exécutables par le processeur, lesdites instructions comprenant de la fonctionnalité pour mener à exécution un procédé d'identification d'un mélange de matériaux d'impression 3D encodé selon l'une quelconque des revendications 1 à 4.

15. Un produit de programme informatique comprenant des instructions pour faire qu'un dispositif informatique implémente un procédé d'identification d'un mélange de matériaux d'impression 3D encodé selon l'une quelconque des revendications 1 à 4.

**Fig. 1**

Fig. 2a

Fig. 2b

**Fig. 3**

410

420

425

430

440

450

**Fig. 4**

Fig. 5

**Fig. 6**

S1 720 primary
S1 coil

secondary
S1 coil

Vout
+
−

S2 primary secondary
S2 coil S2 coil

**Fig. 7**

**Fig. 7a**

S1

S2

+

−

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005099635 A
- US 2011117268 A
- US 2004004113 A